# EUROPEAN PATENT APPLICATION

(11) **EP 1 912 113 A2**
(43) Date of publication of application: **16.04.2008**
(21) Application number: 07254025.5
(22) Date of filing: 10.10.2007
(51) Int. Cl.: G06F 3/044

(54) **Touch panel input device**

(30) Priority: 11.10.2006 JP 2006277808
(71) Applicant: HOSIDEN CORPORATION, Yao-shi, Osaka 581-0071 (JP)
(72) Inventor: Shigeno, Yasuhiro, Osaka 581-0071 (JP); Takehara, Naoya, Osaka 581-0071 (JP); Nakagawa, Hiroshi, Osaka 581-0071 (JP)
(74) Representative: Beresford, Keith Denis Lewis

(57) **Abstract**

A touch panel input device has a panel 10, an X-line electrode 20 (first electrode) arranged on a front surface side of the panel 10, a Y-line electrode 30 (second electrode) disposed on the back surface side and offset or shifted in planar position relative to the X-line electrode. The device detects whether or not a finger has touched the vicinity of a zone between the X-line electrode 20 and the Y-line electrode 30 on the front surface of the panel 10. An electrostatic capacitance C_{f1} and an electrostatic capacitance C_{f2} are made equal by way of increasing the area of the Y-line electrode 30 with respect to that of the X-line electrode 20 or by way of selecting an appropriate material and/or thickness of the panel 10 and/or a transparent hard coat 40.

The touch panel input device prevents detecting precision from significantly degrading even if the electrode areas are small.

## Description

The present invention relates to a touch panel input device of electrostatic capacitance type for detecting whether or not a finger has touched a predetermined position on a front surface of a panel.

Conventionally, this type of touch panel input device is often used with a panel overlaying glass, PEN (polyethylene naphthalate) and the like. The input device has a basic configuration in which X-line electrodes and Y-line electrodes are disposed to the front surface side and the back surface side, respectively, inside the panel and shifted in planar position relative to each other. The device is used to detect whether or not fingers have touched the vicinity of zones between the X-line electrodes and the Y-line electrodes on the front surface of the panel (see e.g., Japanese Laid-Open Patent Publication No. 8-44493).

However, in the above conventional art example, if the areas of X-line electrodes and Y-line electrodes or the pitch intervals between them reduce in accordance with demand for higher resolution, the range of variations in electrostatic capacitance that is output when the finger touches becomes narrow, significantly degrading detecting precision. Then, it would be required to perform signal processing such as amplification and filtering on an output signal, resulting in increased cost for the extra processing.

It is a concern of the present invention to provide a touch panel input device modified so that the detecting precision does not significantly lower even if electrode areas and the like become small.

A touch panel input device according to the present invention includes a panel having a front surface and a back surface, the front surface adapted to be touched with a finger, a first electrode disposed to a front surface side of the panel, and a second electrode disposed to a back surface side of the panel and shifted in planar position relative to the first electrode. In order that electrostatic capacitance generated between the first electrode and the finger is substantially on the same level as electrostatic capacitance generated between the second electrode and the finger, the second electrode is larger than the first electrode. Alternatively at least one of a material and a thickness of the panel is selected such that electrostatic capacitance generated between the first electrode and the finger is substantially on the same level as electrostatic capacitance generated between the second electrode and the finger.

When touching the device with a finger, electrostatic capacitance generated between the first electrode and the finger is substantially on the same level as electrostatic capacitance generated between the second electrode and the finger. Therefore, the device can output electrostatic capacitance in a wide range of variation, and the detecting precision does not significantly lower even if the electrode area or the pitch interval becomes small to meet demand for higher resolution. Therefore, signal processing such as amplification and filtering becomes unnecessary, and cost can be reduced.

It is preferable to use a single sheet of transparent plate for the panel and to use transparent electrodes for the first electrode and the second electrode. In this case, the first electrode is arranged on the front surface of the panel and the second electrode is arranged on the back surface. The front surface of the panel may be hard coated with transparent material, as necessary. The panel preferably has flexibility so as to be bendable. Preferably the flexibility enables the panel to be bendable along a continuous curve or linearly curved surface.

If a single sheet of transparent plate is used, the panel will enjoy high transparency, no occurrence of Newton's rings, ease in bending. Furthermore, such panel may lead to reduced costs and weight.

Preferably, the panel comprises an array of electrodes arranged in rows and columns, the electrodes being staggered so that they do not overlap each other. For example, the first electrodes may be arranged in columns whilst the second electrodes are arranged in rows.

An embodiment of a touch panel input device of the present invention will now be described by way of non-limiting example only with reference to the drawings, in which:
Fig. 1 is a schematic front view of the device;

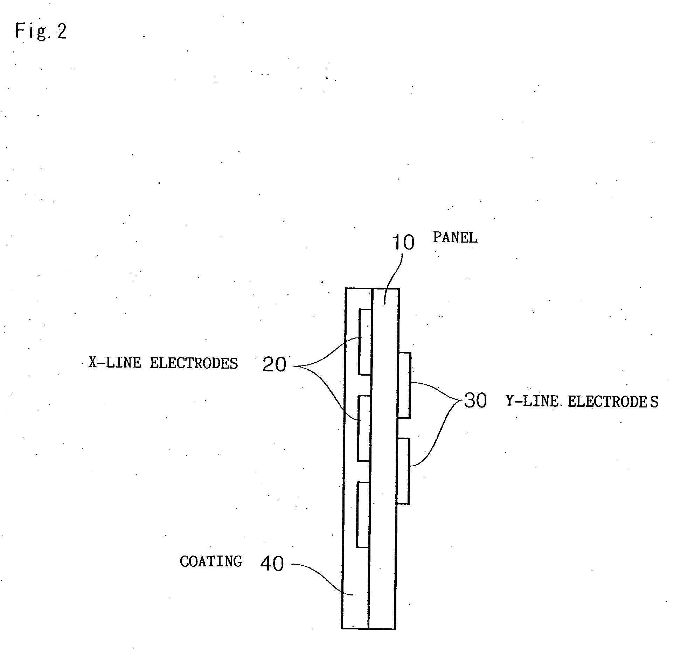

Fig. 2 is a schematic side view of the device; and
Fig. 3 is a schematic cross sectional view of the device also showing electrostatic capacitances generated with an X-line electrode and a Y-line electrode when a finger touches the device.

The touch panel input device described herein is a transparent touch sensor of electrostatic capacitance type used for a flexible display panel equipment. The device comprises a panel 10, X-line electrodes 20 (first electrodes), arranged on a front surface of the panel 10, and Y-line electrodes 30 (second electrodes), arranged on a back surface of the panel 10 and shifted in planar position relative to the first electrode. The device can detect whether or not a finger has touched vicinities of certain zones between X-line electrodes 20 and Y-line electrodes 30 on the front surface of the panel 10.

The panel 10 is configured with a base material having optical transparency and flexibility so as to be transparent and bendable. Specifically, instead of laminating a plurality of transparent plates as in the conventional art, the panel 10 is a single transparent plate made of glass, PET (Polyethylene terephthalate), PEN, PC (Polycarbonate) or other material and has a thickness on the order of micrometer to millimeter (1µ to 1 mm) .

The front surface of the panel 10, or a touch surface of the device, is hard coated with transparent material such as a transparent UV curable hard coat to enhance the durability. This is indicated as coat 40 in the drawings. The coat 40 covers the entire front surface of the panel 10.

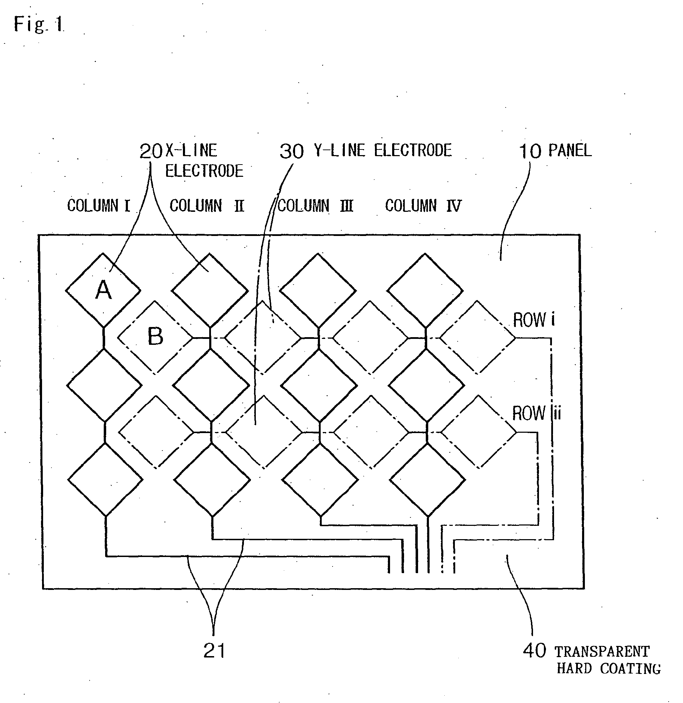

The X-line electrodes 20 and the Y-line electrodes 30 are transparent electrodes disposed on different planes, not entirely overlapping one another. More particularly, as illustrated in Fig. 1, the X-line electrodes 20 and the Y-line electrodes 30 are deposited or applied on the front surface and the back surface, respectively, of the panel 10 and are arranged in a matrix form of four columns (I to IV) x two rows (i to ii). The material of the electrodes is ITO (indium oxide + tin oxide), IZO (indium oxide + zinc oxide), AZO (Aℓ doped zinc oxide), conductive polymer such as PEDOT (polyethylene dioxythiophene) and PSS (polystyrene sulfonate), or the like.

Electrode leads 21, 31 of the X-line electrodes 20 and the Y-line electrodes 30 are connected to a connector (not shown) attached to an edge of the back surface of the panel 10.

The connector electrically connects to a signal processing device of the touch panel (not shown). The processing device controls input/output signals of the X-line electrodes 20 and the Y-line electrodes 30 in time division, and concurrently measures variations in electrostatic capacitance between the X-line electrodes 20 and the Y-line electrodes 30, so that the position of the finger when touching the surface of the panel 10 can be identified.

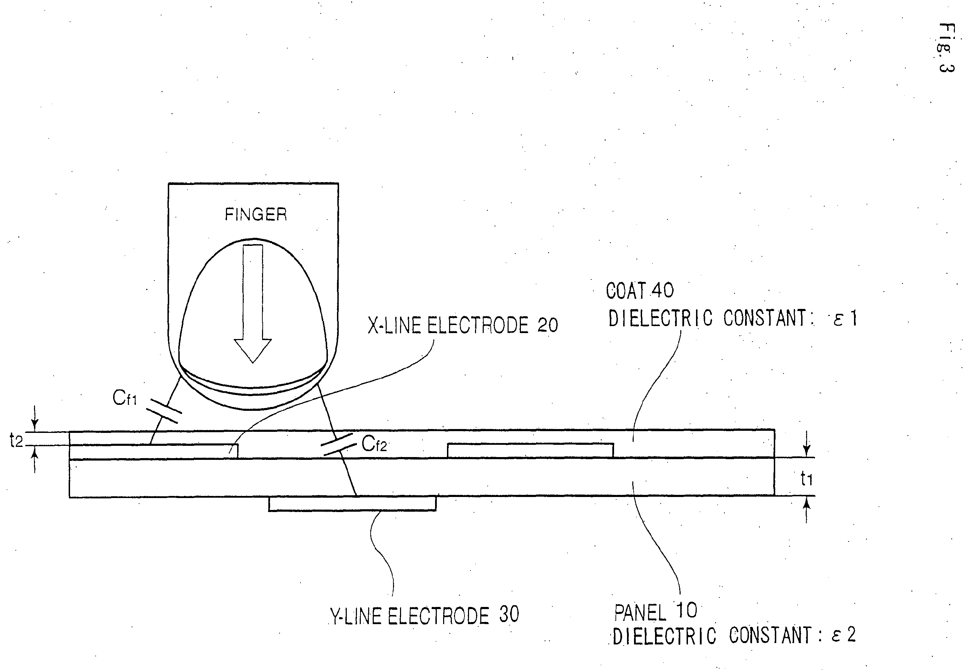

For instance, when touching near or on position A or B shown in Fig. 1 on the front surface of the panel 10 with the finger, an electrostatic capacitance C_{f1} is generated between the X-line electrode 20 in Column I and the finger, and an electrostatic capacitance C_{f2} is generated between the Y-line electrode 30 in Row i and the finger as shown in Fig. 3. Then, the electrostatic capacitance between the X-line electrode 20 in Column I and the Y-line electrode 30 in Row i becomes higher than other positions, whereby the position of the finger can be identified.

The most characteristic aspect of the present device lies in that the electrostatic capacitance C_{f1} and the electrostatic capacitance C_{f2} are set to be equal. Specifically, such aspect is realized by (a) increasing the areas of the Y-line electrode 30 with respect to those of the X-line electrode 20, and/or (b) selecting appropriate materials and thicknesses of the panel 10 and the coat 40.

In measure (a), the electrostatic capacitance C_{f2} becomes larger if the areas of the Y-line electrode 30 are increased in size. In measure (b), the electrostatic capacitance C_{f2} becomes larger if dielectric constants ε1, ε2 of the panel 10 and the coat 40 are set larger and the thicknesses t1, t2 of the panel 10 and the coat 40 are set smaller. The electrostatic capacitance C_{f1} and the electrostatic capacitance C_{f2} are made equal by one of the above measures or a combination thereof.

By way of the measures (a) and/or (b), the electrostatic capacitance C_{f1} and the electrostatic capacitance C_{f2} are made equal. Consequently, compared with the conventional art, the present device generates a wider range of variation in electrostatic capacitance between the X-line electrode 20 and the Y-line electrode 30 when touching the front surface of the panel 10 with the finger. This is based on a fact that a series circuit configured by the X-line electrode 20, the finger and the Y-line electrode 30 will have a maximum capacitance value when the electrostatic capacitance C_{f1} and the electrostatic capacitance C_{f2} are equal.

In this regard, in the conventional art example in which the electrostatic capacitance C_{f2} is smaller than the electrostatic capacitance C_{f1}, if the areas of the X-line electrode 20 and the Y-line electrode 30 or the pitch interval between them are made smaller to meet the demand for higher resolution, the difference between the electrostatic capacitances C_{f1} and C_{f2} becomes increasingly larger. Consequently, the conventional art suffers significant degradation in detecting precision.

This is in contrast with the present device that keeps a wide range of variation in the electrostatic capacitance generated between the X-line electrodes 20 and the Y-line electrodes 30 when touching the front surface of the panel 10 with the finger even if the areas of the X-line electrodes 20 and the Y-line electrodes 30 or the pitch intervals between them become smaller. The detecting precision thus is not significantly degraded. Therefore, the device has an advantage over the conventional art in that the signal processing device of the touch panel does not require the performance of extra signal processing such as amplification and filtering, leading to the reduced costs.

Furthermore, the panel 10 has many advantages because it is made of a single transparent plate: high transparency, no occurrence of Newton's rings, ease in bending. Moreover, such panel may lead to reduced costs and weight.

The touch panel input device according to the present invention is obviously applicable to mobile telephone touch panels, a navigation system touch panel, an ATM (automated teller machine) touch panel, a portable audio player touch panel, and the like. The material of the panel and the number of layers in the panel, and the shapes and arrangement of the electrodes are not limited to the above embodiment as long as the first electrode is disposed to the front surface side of the panel and the second electrode is disposed to a back surface side of the panel and shifted in planar position relative to the first electrode, and as long as the device can detect whether or not the vicinity of a zone between the first electrode and the second electrode on the front surface of the panel is touched with a finger. The coating on the front surface of the panel may be omitted if the durability does not need to be taken into consideration. If the panel has a plurality of layers, the first electrode may be disposed to the front side inside the panel while the second electrode may be disposed to the back side inside the panel.

### COMPONENT LIST

- 10: Panel
- 20: X-line electrode
- 30: Y-line electrode
- 40: Coat

## Claims

1. A touch panel input device of electrostatic capacitance type, comprising:
a panel (10) having a front surface and a back surface, the front surface being adapted to be touched with a finger, in use;
a first electrode (20) disposed to a front surface side of the panel (10); and
a second electrode (30) disposed to a back surface side of the panel (10) and shifted in planar position relative to the first electrode (20);
**characterised in that** the second electrode (30) is larger than the first electrode (20) such that electrostatic capacitance generated, in use, between the first electrode (20) and a finger is substantially on the same level as electrostatic capacitance generated between the second electrode (30) and the finger.

2. A touch panel input device of electrostatic capacitance type, comprising:
a panel (10) having a front surface and a back surface, the front surface being adapted to be touched with a finger, in use;
a first electrode (20) disposed to a front surface side of the panel (10); and
a second electrode (30) disposed to a back surface side of the panel (10) and shifted in planar position relative to the first electrode (20);
**characterised in that** at least one of a material and a thickness of the panel (10) is selected such that electrostatic capacitance generated, in use, between the first electrode (20) and a finger is substantially on the same level as electrostatic capacitance generated between the second electrode (30) and the finger.

3. The touch panel input device according to claim 1 or 2, wherein
the panel (10) comprises a single sheet of transparent plate, and
the first electrode (20) and the second electrode (30) comprise transparent electrodes.

4. The touch panel input device according to claim 3, wherein the first electrode (20) is arranged on the front surface of the panel (10), and the second electrode (30) is arranged on the back surface.

5. The touch panel input device according to claim 3 or 4, wherein the front surface of the panel (10) is hard coated with a transparent material (40).

6. The touch panel input device according to any preceding claim, wherein the panel (10) has flexibility so as to bendable along a linearly curved surface.

7. The touch panel input device according to any preceding claim comprising a plurality of first electrodes (20) and a plurality of second electrodes (30).

8. The touch panel input device according to claim 7 wherein the electrodes (20,30) are arranged in an array, the electrodes being staggered so that they do not overlap each other.
